# EUROPEAN PATENT APPLICATION

(11) **EP 3 800 142 A1**
(43) Date of publication of application: **07.04.2021**
(21) Application number: 19201467.8
(22) Date of filing: 04.10.2019
(51) Int. Cl.: B65G 1/137, A47F 10/04

(54) **TROLLEY STORAGE SYSTEM**

(71) Applicant: Logevo AB, 34324 Älmhult (SE)
(72) Inventor: Nilsson, Tomas, 283 91 Osby (SE)
(74) Representative: Hansson Thyresson AB

(57) **Abstract**

A trolley storage system is provided, comprising at least one racking module (2) comprising at least one storage level (10), each storage level (10) comprising a plurality of storage locations. A transfer aisle (3) is provided adjacent the at least one racking module (2) and a transfer cart (4) is operable along the transfer aisle (3). An input path and an output path are in connection with the transfer aisle (3) for transferring trolleys (7) into and out of the trolley storage system (1). The transfer cart (4) is configured to collect a trolley (7) at the input path (8) and to deliver the collected trolley (7) to a free storage location within the racking (2). The transfer cart (4) is further configured to collect a stored trolley (7) from its storage location in the racking (2) and to deliver the collected trolley (7) to the output path (9).

## Description

### TECHNICAL FIELD

The present invention relates to a trolley storage system and a method of operating such a trolley storage system.

### BACKGROUND

For many decades the trend in sales has been self-service. The manned stores in which a customer asks a salesperson for products arranged behind a counter have been replaced by supermarkets. The same goes for e.g. furniture stores, where the customer picks up the chosen piece of furniture from a storage area. It is however not the most efficient way of handling the goods, whether it concerns furniture or grocery. It may be hard for the customer to orient himself in the store/storage making it hard to find what he seeks. Thus, the visit to the store/storage takes unnecessarily long time, which may annoy the customer.

Further, the customer may take an item from a shelf and later regret it, he does not want to buy the item anymore. Then, there is a high risk that the customer puts the item on the closest shelf available instead of going back to where he took it in the first place. This creates a disarrangement, or even a mess, in the store/storage, which may confuse other customers and give a bad impression of the store.

Not all customer handles the items of the store/storage carefully. There is thus a risk of damaged items due to customer contact, which result in unsellable items and lost income for the store owner.

From the above it is understood that there is room for improvements and the invention aims to solve or at least mitigate the above and other problems.

### SUMMARY

An object of the present invention is to provide a new type of trolley storage system which is improved over prior art and which eliminates or at least mitigates the drawbacks discussed above. More specifically, an object of the invention is to provide a trolley storage system that .... These objects are achieved by the technique set forth in the appended independent claims with preferred embodiments defined in the dependent claims related thereto.

In a first aspect, a trolley storage system is provided. The storage system comprises
- at least one racking module, comprising at least one storage level and each storage level comprises a plurality of storage locations;
- a transfer aisle provided adjacent the at least one racking module;
- a transfer cart operable along the transfer aisle; and
- an input path and an output path in connection with the transfer aisle for transferring trolleys into and out of the trolley storage system.
The transfer cart is configured to collect a trolley at the input path and to deliver the collected trolley to a free storage location within the at least one racking module. The transfer cart is further configured to collect a stored trolley from its storage location in the at least one racking module and to deliver the collected trolley to the output path.

This system is favourable in that pre-loaded trolleys may be stored in a convenient manner and retrieved by a customer at a suitable time. The customer need not go to the store before the trolley is loaded and ready for pick-up, which saves time for the customer.

In one embodiment, each storage location is formed by a portion of a rail unit extending into the racking module in a direction perpendicular to a longitudinal extension of the transfer aisle. This is advantageous in that trolleys may be easily transported to and from the storage locations on the rail portions.

In one embodiment, the at least one racking module and the transfer aisle together form a racking area, and the system further comprises a handout sluice arranged in the output path adjacent the racking area, and a pick-up area arranged on an opposite side of the handout sluice compared to the racking area. The system is advantageous in that the customer need not enter the storage in order to pick up the loaded trolley. An automated storage may be hazardous, and the handout sluice provides a safe way of retrieving a trolley from the storage.

The handout sluice may comprise at least one sluice chamber separated from the racking area by means of a first closable and lockable door, and separated from the pick-up area by means of a second closable and lockable door. This provides additional safety such that no customer or other unauthorized persons has access to the storage. It also provides a higher security against theft.

Preferably, the rail unit arranged adjacent the sluice chamber is extended into the sluice chamber for transfer of a trolley into the sluice chamber. This provides for an convenient way of transporting trolleys into the sluice chamber.

The rail unit arranged within the sluice chamber may be arranged on a lift table, or is height adjustably arranged. In order for customers retrieving trolleys from the sluice chamber not to trip or fall over the rail units, these rail units are preferably arranged such that they may be lowered into the floor, to become level with the ground.

The system may further comprise a CPU and a memory unit configured for at least one of the following: keep track on every storage location in the storage system; which trolley is placed in which storage location; what kind of trolley is located in each storage location; the type of goods loaded on each trolley, and; which customer every trolley is connected to. It is advantageous to use a CPU and a memory in order to store data concerning the trolleys, their locations, the customers and the connection between customers and trolleys.

Preferably, at least one maneuver panel is arranged on an outer wall of the handout sluice. The maneuver panel is preferably configured to receive input data from an operator, preferably a customer, by means of which a trolley associated with the operator, and the storage location of the trolley is determined. This provides a possibility for an operator, e.g. the customer to retrieve a trolley without entering the store, and without the aid of a sales person.

Preferably, the at least one maneuver panel comprises an input device or a recognition device configured to receive input data for linking the operator with the associated trolley. The input device or recognition device is preferably one or more of a barcode reader, a QR-code reader, a keypad, or a biometric recognition device such as an eye, fingerprint, voice or facial recognition device. This provides for an efficient way of connecting a customer and a trolley loaded with the goods belonging to that customer. The system provides access to the trolley loaded with the goods belonging to the correct customer only.

In one embodiment, the transfer cart comprises a platform provided with a rail unit arranged to accommodate a trolley. This enables easy maneuvering of a trolley onto the transfer cart.

Preferably, the transfer cart further comprises lifting means arranged to raise and lower the platform in order to transfer a trolley from the transfer cart to or from one of the storage locations. It is advantageous to have the lifting means integrated in the transfer cart, compared to having a detached lifting means, e.g. an elevator means.

The transfer cart may further comprise a transfer assembly configured to transfer the trolley to and from the transfer cart. The transfer assembly efficiently transfers the trolley to or from the transfer cart, e.g. into a storage location, or into the handout sluice.

Preferably, the transfer assembly comprises a telescopic extension device and a transfer arm movably arranged on the extension device. The transfer arm further comprises a hook portion configured to be engageable with a trolley to be transferred. This is advantageous since the trolleys are usually provided with transversely extending bars with which the hook portion may interact.

In a second aspect, a method of operating a trolley storage system is provided. The method comprises the steps of:
- arranging the transfer cart in the input path;
- collecting the trolley from the input path by means of the transfer cart;
- operating the transfer cart, with the trolley connected thereto, to a storage location within the storage system;
- removing the trolley from the transfer cart and arranging it in a storage location.

This is an advantageous method in that the system is automatic. No person (customer or personnel) needs to insert or retrieve trolleys manually. This is accomplished by the system itself. This saves floor area used, and also provides for increased safety in the working environment.

The method preferably further comprises the step of storing information regarding the goods arranged on the trolley, the storage location of the trolley within the storage system, and identification data of a customer associated with said goods in a memory unit. This provides for efficient handling of the trolley int the storage system.

In one embodiment, the method further comprises the steps of:
- receiving input data from a maneuver panel;
- determining, by means of the input data, which trolley to be retrieved;
- operating the transfer cart to the storage location of the determined trolley;
- retrieving the determined trolley from the storage location by means of the transfer cart;
- operating the transfer cart, with the trolley connected thereto, to the output path;
- removing the trolley from the transfer cart and into a handout sluice.
This method is advantageous in that it provides an automatic way of retrieving trolleys from the system, which is time efficient and safe.

Preferably, after the step of removing the trolley from the transfer cart, the method further comprises the steps of:
- closing a first door of the handout sluice; and
- opening a second door of the handout sluice such that the trolley is available to an operator of the maneuver panel. The operator thus has no access to the storage, which provides safety for him/her since he/she need not enter an area operated by machinery, and he/she need not make any heavy lifts by him-/herself.

### BRIEF DESCRIPTION OF THE DRAWINGS

Embodiments of the invention will be described in the following; references being made to the appended diagrammatical drawings which illustrate non-limiting examples of how the inventive concept can be reduced into practice.
Fig. 1 is a schematic top view of a trolley storage system;
Fig. 2 is a perspective view of the trolley storage system;
Fig. 3 is a perspective side view of the trolley storage system;
Fig. 4 is a perspective side view of a portion of a racking module;
Fig. 5a is a perspective side view of a portion of a racking module with a trolley;
Fig. 5b is a detailed view of the racking module in Fig. 5a showing a rail unit;
Figs 6a-d are perspective views of different kinds of trolleys with load;
Figs 7a-b are top views of trolleys with load in storage locations of the racking;
Fig. 8a is a perspective view of an output path of the storage system;
Fig. 8b is a perspective side view of a portion of the output path in Fig. 8a;
Fig. 8c is a perspective side view of a portion of the output path in Fig. 8a;
Fig. 8d is a perspective side view of a portion of the output path in Fig. 8a;
Figs 9a-d are perspective side views of an output path according to an alternative embodiment;
Fig. 10 is a side view of a transfer cart in the storage system;
Fig. 11 is a perspective view of the transfer cart in Fig. 10, with a transfer assembly;
Fig. 12 is a perspective view of the transfer assembly in Fig. 11;
Fig. 13 is a perspective view of the transfer assembly in Fig. 12;
Fig. 14a is a perspective view of a telescope portion of the transfer assembly in Fig. 11;
Fig. 14b is a perspective view of a sledge portion of the transfer assembly in Fig. 11;
Fig. 14c is a perspective view of a transfer arm of the transfer assembly in Fig. 11;
Fig. 15a is a perspective view of a drive arrangement;
Fig. 15b is a schematic side view detail of the drive arrangement in Fig. 15a;
Fig. 16a is a flow chart over a method for storing a trolley in a trolley storage system;
Fig. 16b is a flow chart over a method for retrieving a trolley from a trolley storage system; and
Fig. 17 is a flow chart over a method for operating a transfer assembly.

### DETAILED DESCRIPTION

Hereinafter, certain embodiments will be described more fully with reference to the accompanying drawings. The invention may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art. If nothing else is stated, different embodiments may be combined with each other.

### Trolley storage system

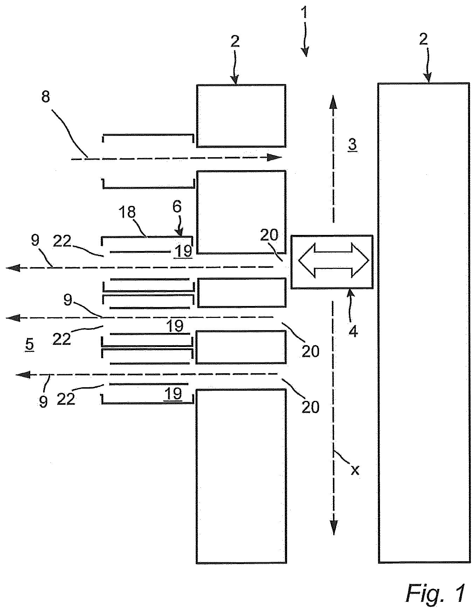

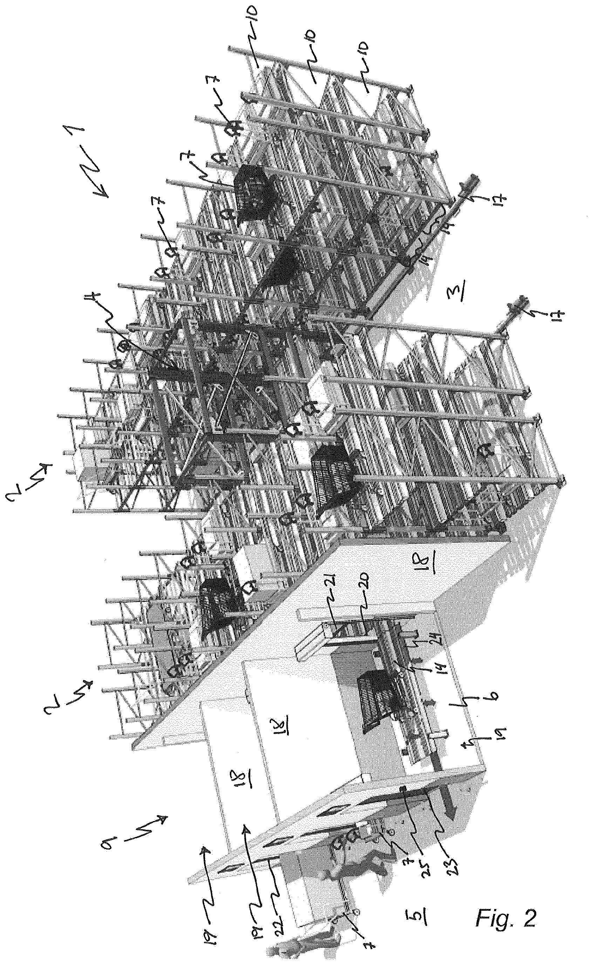

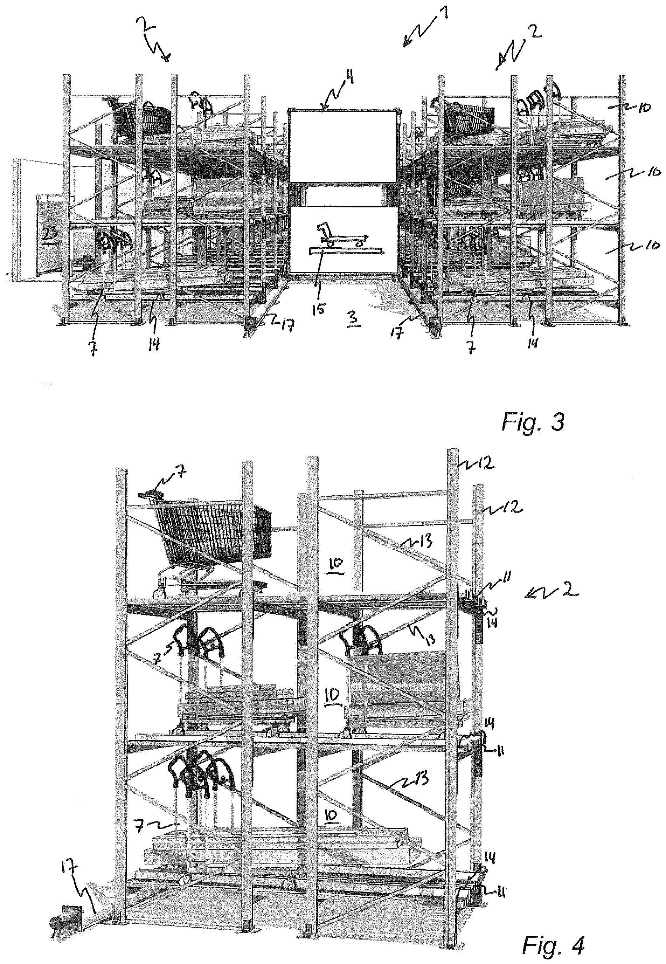

A trolley storage system 1 is shown in different views in Figs 1-3, and a portion of a racking module 2 is shown in Fig. 4. The storage system 1 comprises two racking modules 2, configured to accommodate different types of trolleys 7, which are loaded with goods. Each racking module 2 comprises a framework of horizontal 11 and vertical 12 beams, supported by diagonal struts 13. Each racking module 2 has three storage levels 10. Each storage level 10 is provided with rail units 14 for the trolleys 7 to be positioned on, and to travel along. The rail units 14 extend in a direction perpendicular to the longitudinal extension of the transfer cart aisle 3. Two storage locations are formed along each rail unit 14. That is, two trolleys can be positioned after one after the other on each rail unit 14. Alternatively, the rail units are longer, and there are room for more than two trolleys 7 along each rail unit 14.

The two racking modules 2 are separated by a transfer cart aisle 3. A transfer cart 4 is configured to operate along the transfer cart aisle 3, i.e. in the direction along arrow x in Fig. 1. The transfer cart 4 is configured to operate along a rail unit 17 arranged along each side of the transfer cart aisle 3. The transfer cart 4 comprises a platform 15 arranged to accommodate a trolley 7. The transfer cart 4 further comprises lifting means 16 arranged to raise and lower the platform 15 in order to transfer a trolley 7 from the transfer cart 4 to or from one the different storage levels 10. The transfer cart 4 also comprises a transfer assembly 29 for transferring or moving trolleys 7. This is described in more detail below.

The storage system 1 has one input path 8 in connection with the transfer aisle 3 where the loaded trolleys 7 are brought into the system 1. For example, store personnel may load the input path 8 with pre-loaded trolleys 7 for further transport into the trolley storage system 1.

The storage system 1 also has an output path 9 in connection with the transfer aisle 3. The output path 9 comprises a handout sluice 6 and a pickup area 5. The handout sluice 9 comprises a separate section, parted from the racking area by solid walls 18. In the shown embodiment, the handout sluice 9 is divided into three separate sluice chambers 19. Each sluice chamber 19 comprises a first opening 20 which is arranged between the respective sluice chamber 19 and the racking area. Each opening 20 is closable by means of e.g. a door 21 or hatch, which is lockable.

Each sluice chamber 19 further comprises a second opening 22 arranged between the chamber 19 and the pickup area 5. The second opening 22 is also closable by means of a door 23 or a hatch, which is lockable.

The pick-up area 5 is located on an opposite side of the handout sluice 9 compared to the racking 2 area.

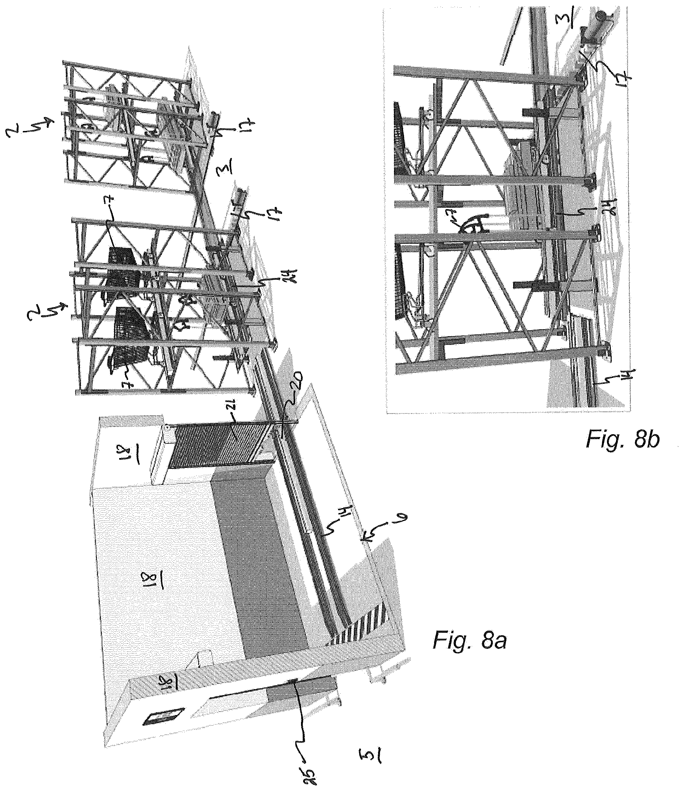

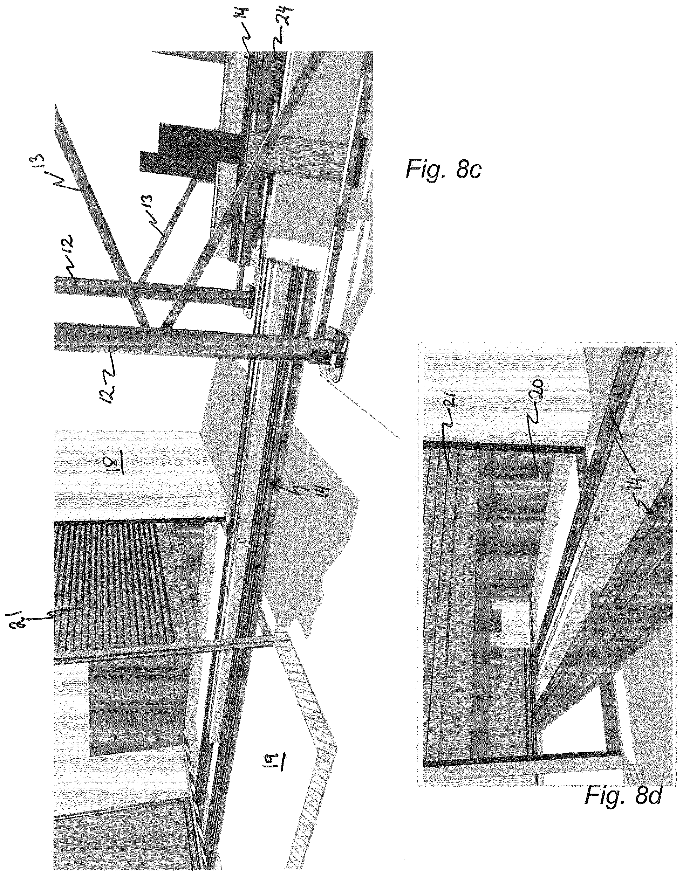

A portion of the rail unit 14 of the racking 2 is extended from the racking module 2, through the first opening 20 and into the sluice chamber 19. As best shown in Fig. 8d, the door 21 is shaped to conform with the profile of the rail unit 14 in order for the door 21 to be completely closable. Alternatively, if the door does not have the cutout shape, a small gap may be provided in the rail unit 14 such that the door can be closed.

The lowermost level 10 of the trolley storage system 1 is not arranged on floor/ground level, but a distance above ground level. This distance may be e.g. 0-500 mm, preferably 200-400 mm, most preferred 350 mm above ground level. Thus, the portion of the rail unit 14 which is located inside the sluice chamber 19 is arranged on a lift table 24 of adjustable height, and therefore, this rail unit 14 portion is of adjustable height. In an alternative embodiment, it is the portion of the rail unit 14 itself that is height adjustable. The benefits of this is explained in more detail below.

A maneuver panel 25 is arranged on the outer wall portion 18 of the handout sluice 6. The maneuver panel 25 is thus accessible for a user, e.g. a customer coming to pick up his/her trolley 7 with goods. This will be explained in more detail below.

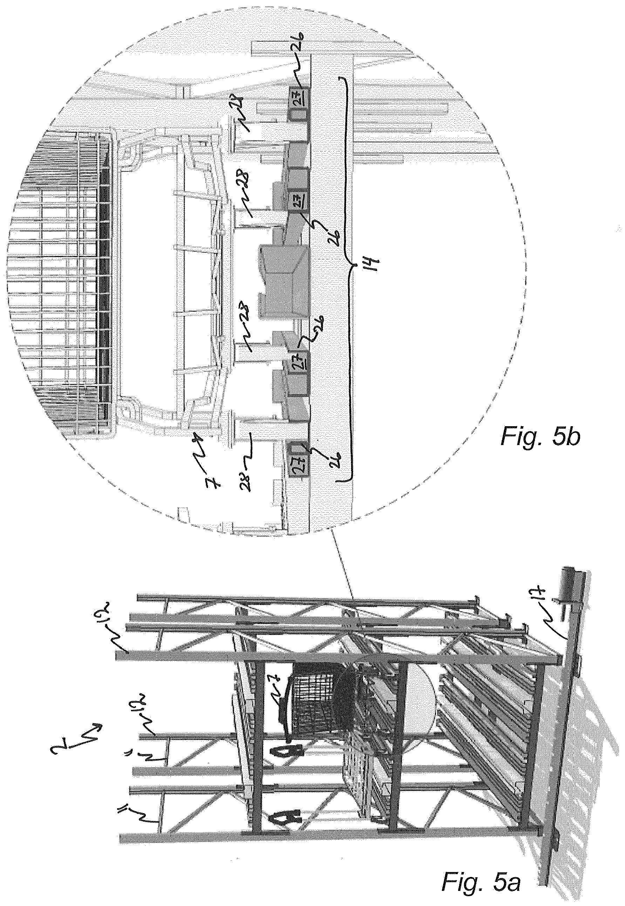

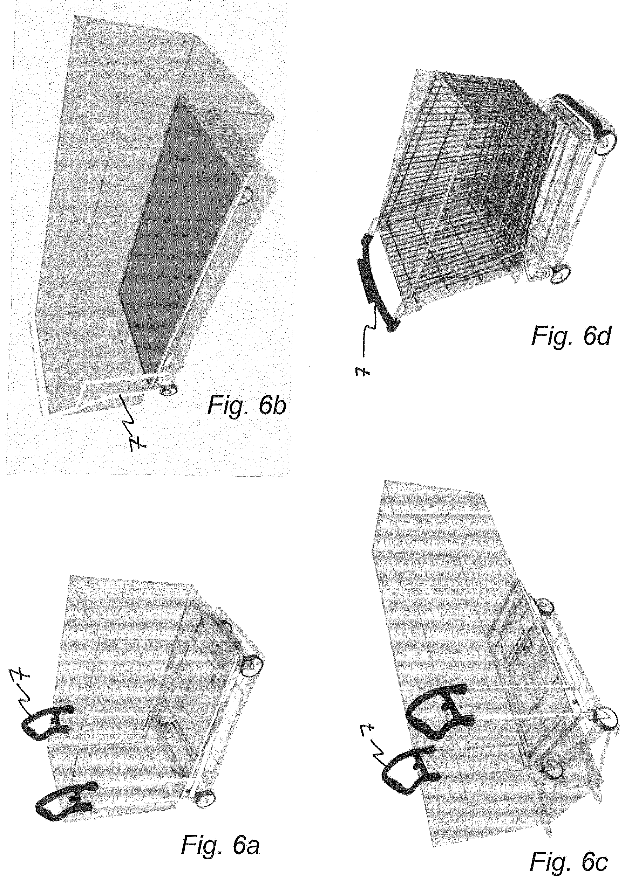

Fig. 5a shows a portion of a racking module 2 with a trolley 7 inserted on the rail unit 14 of an intermediate storage level 10. Fig. 5b shows an enlarged portion of the lowermost portion of the trolley 7 located on the rail unit 14. The rail unit 14 is configured to accommodate several types of trolleys 7. Thus, the rail unit 14 comprises four rail portions 26. The rail portions 26 are arranged horizontally spaced apart in parallel with each other on the horizontal beams 11 of the racking 2. Each rail portion 26 comprises two grooves 27 for accommodation of trolley wheels 28. Thus, the rail unit 14 can accommodate several types of trolleys 7 with varying distances between the wheels 28. In the depicted embodiment, the trolley 7 uses grooves number 2, 4, 5 and 7, calculated from the left in the picture. Other types of trolleys 7, as shown in Figs 6a-6d, may use other combinations of grooves 27.

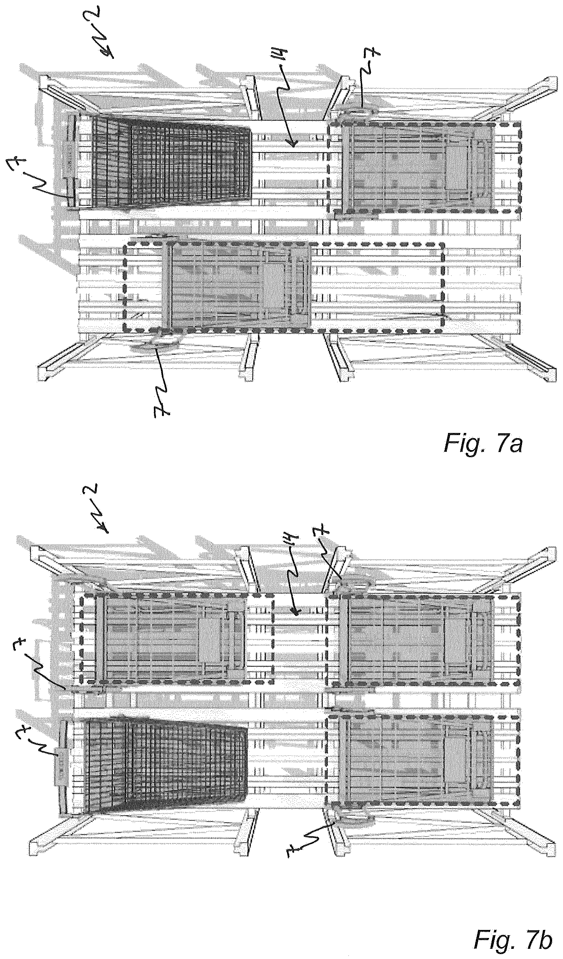

In Figs 7a-7b different combinations of trolleys 7 with loads arranged in the racking 2 of the trolley storage system 1 are shown. Each racking module 2 is deep enough to accommodate two trolleys 7 with smaller/normal sized loads, or one trolley 7 with a larger load.

The trolley storage system 1 comprises a software configured to keep track on every storage location in the storage system, which trolley 7 is placed in which storage location, which kind of trolley 7 is located in each storage location, the type of goods loaded on a trolley 7 (e.g. if the goods extend beyond the periphery of the trolley 7 such that it occupies two storage locations), which customer every trolley 7 belongs to (the customer is recognized by means of e.g. a barcode or QR-code on e.g. a receipt, digit/letter/character code, a phone number, an ID-number, bank id, eye recognition, or any other suitable recognition means), and any other suitable information regarding the trolleys 7, the goods, the storage locations or the customer.

### The trolley storage system functionality

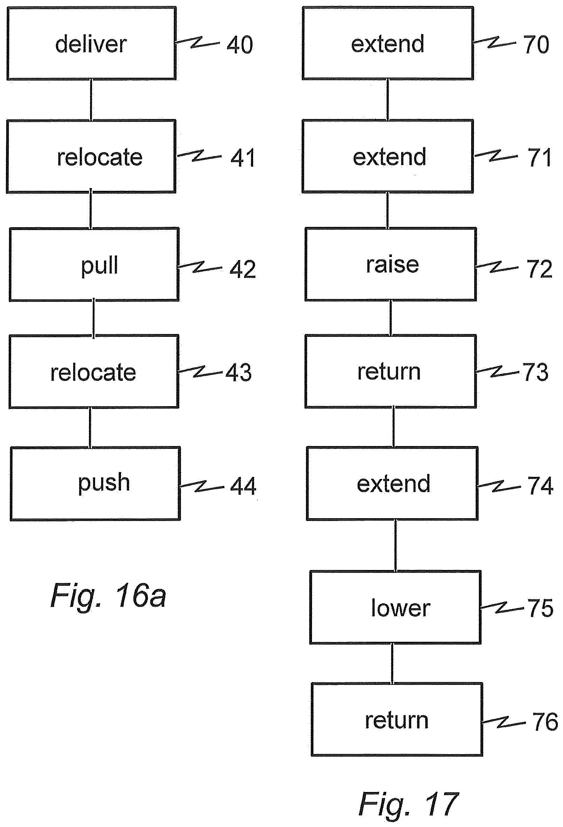

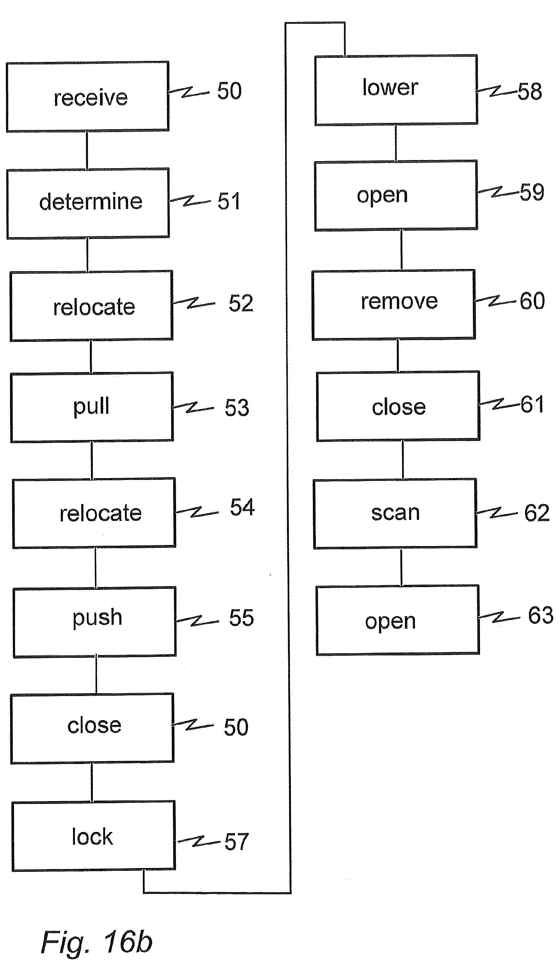

The function of the trolley storage system 1 will now be described with reference mainly to Figs 1, 2 and 16a-b. A trolley 7 pre-loaded with goods is delivered 40 to the input path 8. The trolley 7 may be loaded in several ways, e.g. manually or automatically, and the goods may come from shelves in a store or from a storage. The goods may be any type of goods which is loadable on a trolley, e.g. grocery, preassembled furniture, furniture to be assembled, consumables, or any other goods.

When the trolley 7 is located in the input path 8, the transfer cart 4 is relocated 41 to the input area 8. Then, the transfer assembly 29 of the transfer cart 4 engages with the undercarriage of the trolley 7 and pulls 42 it onto the transfer cart 4. This procedure is more thoroughly described below.

The transfer cart 4 is then relocated 43 to a free storage space in the racking 2 of the trolley storage system 1 and the transfer assembly 29 pushes 44 the trolley 7 into the storage space in the racking 2. Now, the trolley 7 is located in its storage space, and the transfer cart 4 is either brought to an idle position, or it is sent to attend to another trolley 7.

When a customer comes to the pick-up area 5 of the storage 1 in order to pick up his/her goods, i.e. the loaded trolley 7, he/she uses the maneuver panel 25. The maneuver panel is configured to receive 50 input data from the customer, by means of which the correct trolley 7 is determined. The input data may be in the form of e.g. a barcode or QR-code on e.g. a receipt, a digit/letter/character code, a phone number, an ID-number, bank ID, a fingerprint, eye recognition, or any other suitable recognition means.

When the customer has entered the correct input data, the software of the storage system 1 determines 51 where the trolley 7 associated with the customer is located, and the transfer cart 4 is relocated 52 to that storage location. The transfer assembly 29 of the transfer cart 4 telescopes into the racking 2, engages (according to the procedure described further below) with the trolley 7 and pulls 53 it onto the rail unit 14 portion of the transfer cart 4. Then, the transfer cart 4 is relocated 54 to the output path 9, and the trolley 7 arranged on the transfer cart 4 is pushed 55, by means of the transfer assembly 29 which telescopes into the handout sluice 6, onto the lift table 24 of the handout sluice 6.

The transfer assembly 29 is then reversely telescoped back onto the transfer cart 4, and the sluice door 21 is closed 56 such that the opening 20 between the handout sluice 6 and the racking 2 area is closed. Preferably, the door 21 is also locked 57.

Then, the lift table 24 provided with a rail unit 14 portion on which the trolley 7 is located is lowered 58 such that the trolley 7 is level with the ground. Thereafter, the sluice door 23 is opened 59 such that the trolley 7 can be transferred, by the customer, from the sluice chamber 19, through the opening 22, and removed 60 out of the storage system 1.

The door 23 is closed 61 again, and the sluice chamber 19 is scanned 62 in order to make sure that no person is present in the chamber 19. The scan may be conducted in any suitable manner, e.g. by means of a camera and image recognition, an IR camera or the like. Thereafter, the door 21 between the racking 2 area and the sluice chamber 19 may be opened 63 in order for the transfer cart 4 to deliver another trolley 7.

Figs 8a-d show an alternative embodiment where the lift table 24 is arranged within the racking 2 instead of being arranged in the sluice chamber 19 of the handout sluice 6. The function of the lift table 24 is the same as described earlier but has the benefit of no moving parts in the sluice chamber 19. Thus, the risk of a customer getting injured due to moving machine parts is reduced.

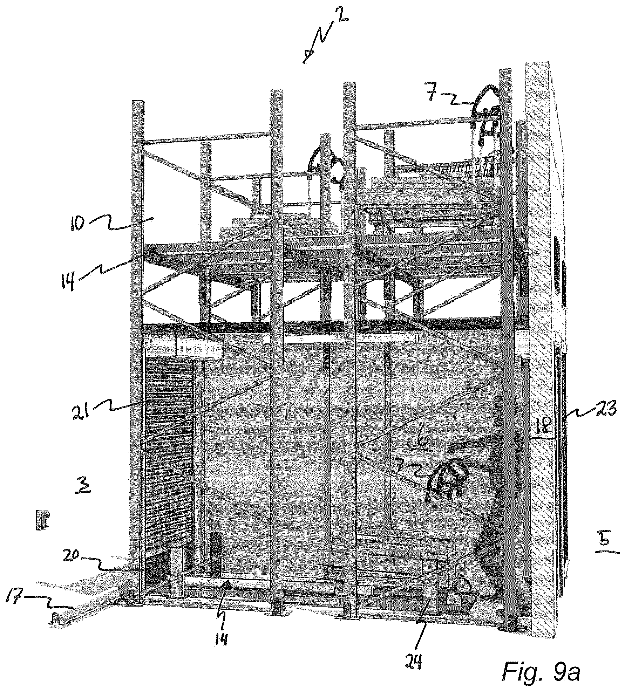

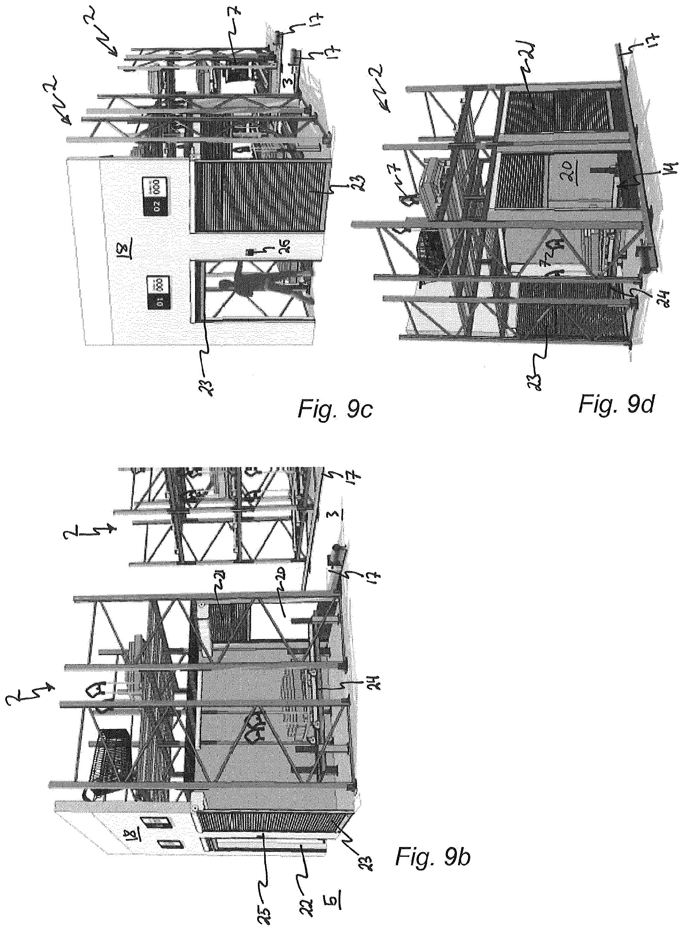

Figs 9a-d show another alternative embodiment where the handout sluice 6 is integrated within the storage system 1. The handout sluice 9 is in direct connection with the transfer aisle 3, and there are storage locations provided above and besides the handout sluice 6. Thus, the storage system 1 has a flush outer surface, compared to the earlier described embodiment where the handout sluice 6 is located outside, i.e. partially detached of the racking 2 area.

In this embodiment, the lift table 24 is arranged within the sluice chamber 19. Even though not visible from the figures, each sluice chamber 19 of the handout sluice 6 must be enclosed by more or less solid walls. This is since customers entering the sluice chamber 19 must not be able to proceed into the racking 2 area of the storage system 1, due to safety reasons, both regarding theft, and regarding personal safety for the customers. Also, a customer or other person must not by mistake be able to enter the racking 2 area and possibly be hurt by moving machinery.

In this embodiment, storage space is somewhat decreased compared to the earlier described embodiment, but a flush outer surface is achieved, which may be beneficial in some cases.

In other embodiments, the storage system 1 may comprise any suitable number of input paths 8 and/or any suitable number of output paths 9.

The solid walls 18 of the handout sluice may be formed by a net or mesh material instead of being completely solid.

If a trolley 7 to be retrieved from the storage system 1 is located behind a second trolley 7 on the rail unit 14, the second trolley 7 is first removed from the rail unit 14 by means of the transfer cart 4 and located in another storage location. Thereafter, the trolley 7 to be retrieved is collected and transferred to the output path 9.

In one embodiment, the trolleys 7 are provided with identification means, and the storage spaces are provided with detection means. The detection means is configured to be in connection with the CPU and to scan the identification means of a trolley located in a storage space. Corresponding detection means may be arranged in one or more of the following: the transfer cart 4, the input path 8, the output path 9, the handout sluice 6, or any other suitable location within the storage system 1. By means of the identification means and the detection means, it is possible to keep track of each individual trolley 7 and where in the system said trolley 7 is located.

### Transfer assembly

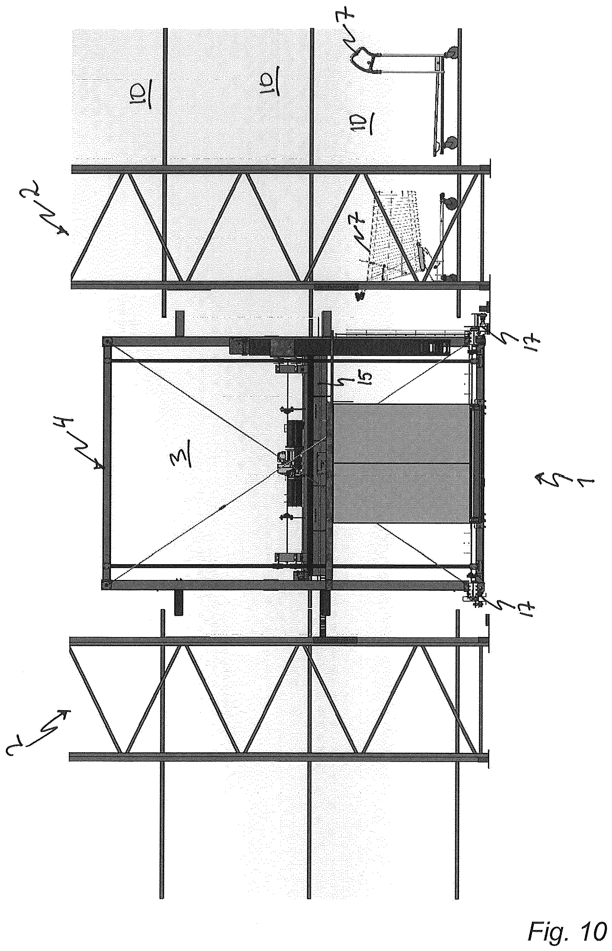

The storage system 1 is provided with an assembly 29 which automatically transfers the trolleys 7 from the input path 8 and within the system 1 until delivery through the output path 9. This is accomplished by a transfer assembly 29 embodied by a push and pull assembly 29 shown in Figs 10-15.

In Fig. 10, a portion of the trolley storage system 1 is shown, with the transfer cart 4 located in the transfer aisle 3 between two racking modules 2. The platform 15 of the transfer cart 4 is located in level with a middle storage level 10 of the trolley storage system 1. Two trolleys 7 are located on a lower storage level 10 of the trolley storage system 1.

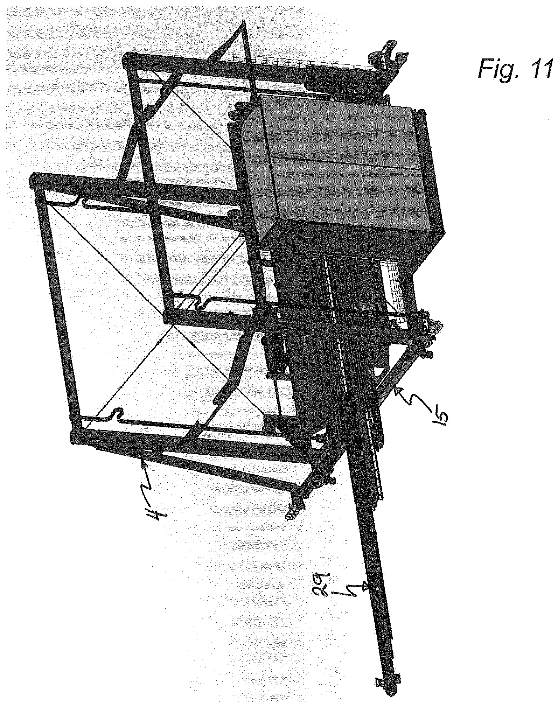

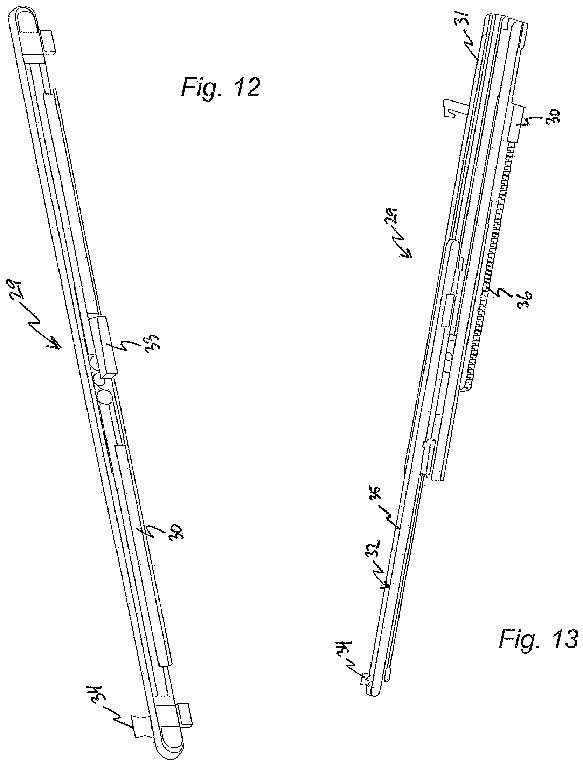

The transfer cart 4, with the transfer assembly 29 arranged thereon, is shown in more detail in Fig. 11, and the components of the transfer assembly 29 are shown in Figs 12-15. The transfer assembly 29 comprises a sledge 30, a telescope portion 31 and a transfer arm 32, also denoted push/pull arm 32. The telescope portion 31 is displaceably arranged on the transfer cart 4. The sledge 30 is displaceably arranged on the telescope portion 31. The transfer arm 32 is displaceably arranged on the sledge 30. This arrangement 29 entails a double telescopic function, as both the sledge 30 and the telescopic portion are extendable from the transfer cart 4, and the push-/pull arm 32 is movable thereon. The transfer assembly 29 is extendable in two directions, both to the left and to the right in Fig. 10.

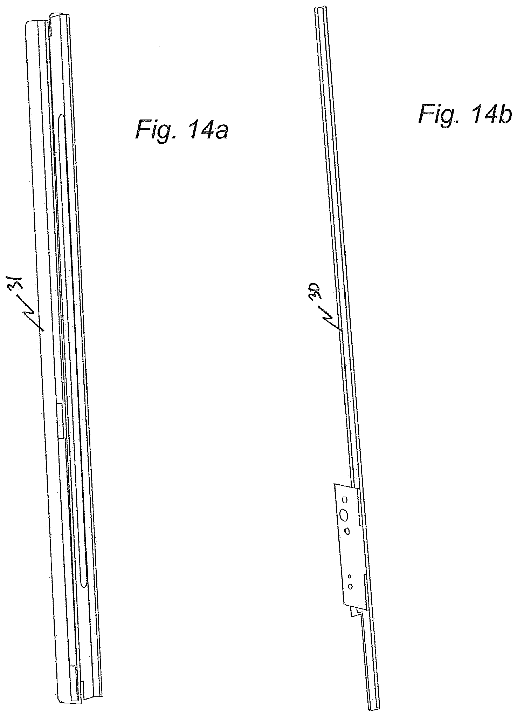

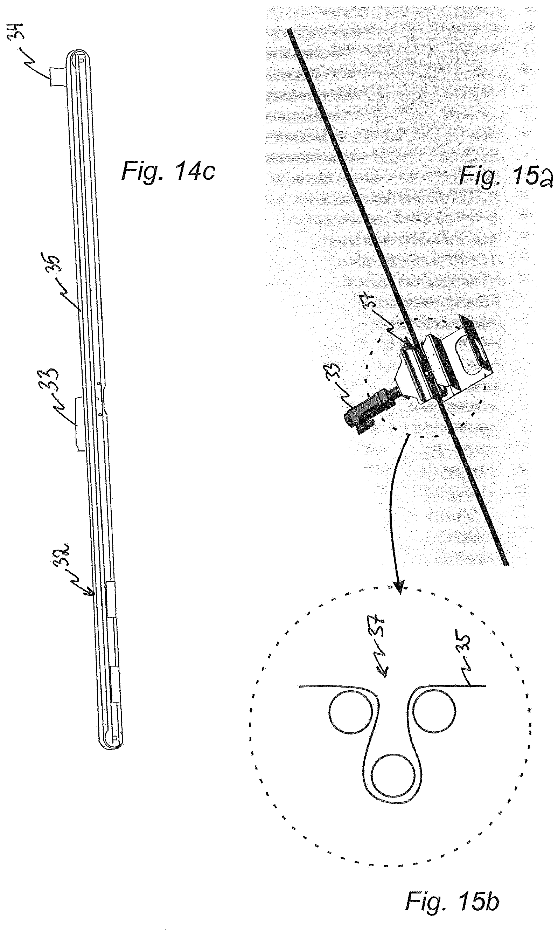

Additionally, the push/pull arm 32 is provided with a hook portion 34 which has an idle, lowered position, and an active, raised position. The hook portion 34 is configured to be able to be raised and lowered between these two positions. The hook portion 34 is movable along a top portion of the push-/pull arm 32 by means of a drive belt 35. The drive belt 35 extends around the push-/pull arm 32, which can be seen in e.g. Fig. 14c. By displacement of the drive belt 35, the hook portion 34 is displaceable, in the direction of the rail unit 14, between both end portions of the push/pull arm 32. In its raised state, the hook portion 34 is configured to engage with an undercarriage of a trolley 7, and to push or pull the trolley 7 in order to transfer it e.g. into or out of the racking 2 or onto or off the transfer cart 4. This is further explained below.

The transfer assembly 29 is provided with three servo motors 33, one arranged for each linear movement. That is, one servomotor 33 is arranged for the movement of the telescope portion 31 in relation to the transfer cart 4. This motor 33 entails that the sledge 30 is moved in relation to the telescope portion 31 by means of a belt drive 36. Another servomotor 33 is arranged on the sledge 30 for movement of the push/pull arm 32, and yet another servomotor 33 is arranged for the movement of drive belt 35 arranged on the push/pull arm 32, which belt 35 is configured to displace the hook portion 34.

The total movement of the transfer assembly 29 can thus be controlled to a high precision and it is possible to keep track on and register exactly where the hook portion 34 of the push/pull arm 32 is located. The transfer assembly 29 is configured to be extendable in two directions, i.e. to the right and to the left in Fig. 10. The transfer assembly 29 is thus able to extend from the transfer cart 4 and into the racking modules 2 on both sides of the transfer aisle 3. In one embodiment, the total movement from a leftmost end point to an opposite rightmost end point of the hook portion 34 is nine meters. This is suitable for a trolley storage system 1 which is able to accommodate two trolleys 7 in each storage aisle of each storage level 10, as pictured in Fig. 10.

Figs 15a-b shows one of the motors 33, the transfer belt 35 and a drive unit 37, configured in an omega configuration with three drive wheels around which the drive belt 35 is arranged in order to allow the belt 35 to be driven by the motor 33. The same type of drive unit 37 with omega configuration is used also for the other servo motors 33, and also in the lifting means 16 of the transfer cart 4.

### The transfer assembly functionality

Now the function of the transfer system 29 is described with reference mainly to Figs 1,2, 10 and 17. When a trolley 7 is to be stored in the trolley storage system 1, the transfer cart 4 is moved to the input path 8, where the trolley 7 is positioned. The transfer cart 4 is maneuvered to the input path 8, and the transfer assembly 29 is maneuvered such that the telescope portion 31 and the sledge 30 extend 70 towards the trolley 7 and the push/pull arm 32 extends 71 below the trolley 7. The hook portion 34 is raised 72 in order to engage with the undercarriage of the trolley 7. The transfer assembly is operated reversely such that the sledge 30, the telescope portion 31 and the push/pull arm 32 is returned 73 onto the transfer cart 4. Since the hook portion 34 of the push-/pull arm is in engagement with the trolley 7, the trolley 7 is brought onto the transfer cart 4. Thereafter, the transfer cart 4 is maneuvered to a predetermined storage aisle and the platform 15 of the transfer cart 4 is raised to a predetermined storage level 10 where the telescope portion 31, the sledge 30 and the push/pull arm 32 transfer assembly 29 are extended 74 into the racking 2, and thus the trolley 7 is pushed into the storage level 10, by means of the hook portion 34. The trolley 7 is now positioned in its storage location. The hook portion 34 is lowered 75 and the push/pull arm 32 of the transfer assembly 29 is returned 76 back onto the transfer cart 4, which can be moved to an idle position, or continue to attend other trolleys 7.

When a trolley 7 is to be retrieved from the trolley storage system 1, the transfer cart 4 is maneuvered to the storage location of that trolley 7. The transfer assembly 29 is operated such that the push/pull arm extends 71 below the trolley 7. The hook portion 34 is raised 72 from the idle position into the active position in order to engage with the trolley 7. The transfer assembly 29 pulls 73 the trolley 7 onto the transfer cart 4 by means of the hook portion 34. The transfer cart 4 is maneuvered to the output path 9, and the transfer assembly 29 pushes 74 the trolley 7 into the sluice chamber 19.

### Aspects of the transfer assembly

1. A trolley transfer assembly (29) for a trolley storage system (1), the assembly (29) comprising a telescopic extension device (38) and a transfer arm (32) movably arranged on the extension device (38), wherein the transfer arm (32) further comprises a hook portion (34) configured to be engageable with a trolley (7) to be transferred.
2. The assembly according to aspect 1, wherein the hook portion (34) is adjustable between an active position and an idle position.
3. The assembly according to aspect 2, wherein the hook portion (34) is arranged on a drive belt (35) which is arranged around a periphery of the transfer arm (32) and driven by a motor (33) such that the hook portion (34) is displaceable between opposing end portions of the transfer arm (32).
4. The assembly according to aspect 1 or 2, wherein the extension device (38) comprises a sledge (30) and a telescope portion (31), displaceably arranged in relation to each other by means of a drive belt and a motor (33).
5. The assembly according to aspect 3 and/or 4, wherein the motors (33) are servo motors (33).
6. The assembly according to aspect 4 or 5, wherein the transfer arm (32) is arranged on the sledge (30).
7. The assembly according to any of the preceding aspects, wherein the assembly (29) is configured to be arranged on a transfer cart (4) of a trolley storage system (1).
8. Method of transferring a trolley (7) by means of a trolley transfer assembly (29) according to any one of the preceding aspects, comprising the steps of:
   - telescoping the extension device (38) such that the transfer arm (34) is located below the trolley (7) to be transferred;
   - arranging the hook portion (34) in the active position such that it engages the trolley (7);
   - reverse telescoping the extension device (38), thereby bringing the transfer arm (32) towards the center of the transfer assembly (29), and thereby transferring the trolley (7) engaged by the hook portion (34).
9. The method according to aspect 8, wherein the step of arranging the transfer arm (32) below the trolley (7) to be transferred comprises telescoping the extension device (38) and displacing the transfer arm (32).
10. The method according to aspect 8 or 9, further comprising a step of arranging the hook portion (34) in an idle position when a trolley (7) has been transferred.
11. The method according to any one of the aspects 8-10, wherein the transfer of the trolley (7) is one of the following: from an input path (8) into a trolley storage system (1); onto a transfer cart (4) of a trolley storage system (1); into a racking (2) of a trolley storage system (1), or; to an output path (9) of a trolley storage system (1).
12. The method according to any one of the aspects 8-11, wherein the transfer assembly (29) is arranged on a transfer cart (4) of a trolley storage system (1) and the method comprises a step of relocating the transfer cart (4) prior to the step of arranging the transfer arm (34) below the trolley (7) to be transferred.

## Claims

1. Trolley storage system comprising:
- at least one racking module (2) comprising at least one storage level (10), wherein each storage level (10) comprising a plurality of storage locations;
- a transfer aisle (3) provided adjacent the at least one racking module (2);
- a transfer cart (4) operable along the transfer aisle (3); and
- an input path (8) and an output path (9) in connection with the transfer aisle (3) for transferring trolleys (7) into and out of the trolley storage system (1);
wherein the transfer cart (4) is configured to collect a trolley (7) at the input path (8) and to deliver the collected trolley (7) to a free storage location within the at least one racking module (2), and
wherein the transfer cart (4) further is configured to collect a stored trolley (7) from its storage location in the at least one racking module (2) and to deliver the collected trolley (7) to the output path (9).

2. The system according to claim 1, wherein each storage location is formed by a portion of a rail unit (14) extending into the racking module (2) in a direction perpendicular to a longitudinal extension of the transfer aisle (3).

3. The system according to claim 1, wherein the at least one racking module (2) and the transfer aisle (3) together form a racking area, and wherein the system (1) further comprises a handout sluice (6) arranged in the output path (9) adjacent the racking area, and a pick-up area (5) arranged on an opposite side of the handout sluice (6) compared to the racking area.

4. The system according to claim 3, wherein the handout sluice (6) comprises at least one sluice chamber (19) separated from the racking (2) area by means of a first closable and lockable door (21), and separated from the pick-up area (5) by means of a second closable and lockable door (23).

5. The system according to claim 4, wherein the rail unit (14) arranged adjacent the sluice chamber (19) is extended into the sluice chamber (19) for transfer of a trolley (7) into the sluice chamber (19).

6. The system according to claim 5, wherein the rail unit (14) arranged within the sluice chamber (19) is arranged on a lift table (24), or is height adjustably arranged.

7. The system according to any one of the preceding claims, further comprising a CPU and a memory unit configured for at least one of the following: keep track on every storage location in the storage system (1); which trolley (7) is placed in which storage location; what kind of trolley (7) is located in each storage location; the type of goods loaded on each trolley (7), and; which customer every trolley (7) is connected to.

8. The system according to any one of claims 4-7, wherein at least one maneuver panel (25) is arranged on an outer wall of the handout sluice (6), the maneuver panel (25) being configured to receive input data from an operator, preferably a customer, by means of which a trolley (7) associated with the operator, and the storage location of the trolley (7) is determined.

9. The system according to claim 8, wherein the at least one maneuver panel (25) comprises an input device or a recognition device configured to receive input data for linking the operator with the associated trolley (7), the input device or recognition device is preferably one or more of a barcode reader, a QR-code reader, a keypad, a biometric recognition device such as an eye, fingerprint, voice or facial recognition device.

10. The system according to any one of the preceding claims, wherein the transfer cart (4) comprises a platform (15) provided with a rail unit (14) arranged to accommodate a trolley (7).

11. The system according to claim 10, wherein the transfer cart (4) further comprises lifting means (16) arranged to raise and lower the platform (15) in order to transfer a trolley (7) from the transfer cart (4) to or from one of the storage locations.

12. The system according to claims 10-11, wherein the transfer cart (4) further comprises a transfer assembly (29) configured to transfer the trolley (7) to and from the transfer cart (4).

13. The system according to claim 12, wherein the transfer assembly (29) comprises a telescopic extension device (38) and a transfer arm (32) movably arranged on the extension device (38), wherein the transfer arm (32) further comprises a hook portion (34) configured to be engageable with a trolley (7) to be transferred.

14. Method of operating a trolley storage system according to any one of the claims 1-13, the method comprising the steps of:
- arranging the transfer cart (4) in the input path (8);
- collecting the trolley (7) from the input path (8) by means of the transfer cart (4);
- operating the transfer cart (4), with the trolley (7) connected thereto, to a storage location within the storage system (1);
- removing the trolley (7) from the transfer cart (4) and arranging it in a storage location.

15. The method of claim 14, further comprising the step of:
- storing information regarding the goods arranged on the trolley (7), the storage location of the trolley (7) within the storage system, and identification data of a customer associated with said goods in a memory unit.

16. The method of claims 14-15, further comprising the steps of:
- receiving input data from a maneuver panel (25);
- determining, by means of the input data, which trolley (7) to be retrieved;
- operating the transfer cart (4) to the storage location of the determined trolley (7);
- retrieving the determined trolley (7) from the storage location by means of the transfer cart (4);
- operating the transfer cart (4), with the trolley (7) connected thereto, to the output path (9);
- removing the trolley (7) from the transfer cart (4) and into a handout sluice (6).

17. The method of claim 16, wherein after the step of removing the trolley (7) from the transfer cart (4), the method further comprises the steps of:
- closing a first door (21) of the handout sluice (6); and
- opening a second door (23) of the handout sluice (6) such that the trolley (7) is available to an operator of the maneuver panel (25).
